# EUROPEAN PATENT SPECIFICATION

(11) **EP 0 357 992 B1**
(45) Date of publication and mention of the grant of the patent: **02.11.1995**
(21) Application number: 89114824.9
(22) Date of filing: 10.08.1989
(51) Int. Cl.: H04L 12/40

(54) **Bus-type local area network using a token-passing scheme**
Busartiges lokales Netz mit Tokenübergabeverfahren
Réseau local de type bus utilisant une technique de passage de jeton

(30) Priority: 10.08.1988 JP 199340/88
(43) Date of publication of application: 14.03.1990
(73) Proprietor: OMRON CORPORATION, Kyoto-shi, Kyoto-fu 617 (JP)
(72) Inventor: Kato, Tetsuo c/o Patent Dept., Shiokaiimji Nagaokayo-shi Kyoto-fu (JP); Koshiro, chiaki c/o Patent Dept., Shiokaiimji Nagaokayo-shi Kyoto-fu (JP); Okamura, Kotara c/o Patent Dept., Shiokaiimji Nagaokayo-shi Kyoto-fu (JP)
(74) Representative: Kahler, Kurt, Dipl.-Ing.

(56) References cited:
- US-A- 4 745 598
- PATENT ABSTRACTS OF JAPAN, vol. 8, no. 135 (E-252)[1572], 22nd June 1984; JP-A-59 45 742 (TATEISHI DENKI K.K.) 14-03-1984
- PROCEEDINGS IECON '85, vol. 2, San Francisco, CA, 18th - 22nd November 1985, pages 829-834, IEEE, New York, US; Y. SHIMOKAWA et al.: "Real-time Ethernet forindustrial applications"

## Description

The present invention relates to a bus-type LAN (local area network) system which controls data communication by passing a token through a logical ring, in particular to a transmission priority control system in a bus-type LAN system comprising a master station for managing and constructing a logical ring and normal stations only for transmission and reception of data.

### BACKGROUND OF THE INVENTION

As a known communication control system for use in small bus-type LANs, there is known the token passing system which, as described in IEEE802.4, constructs a logical ring for assigning a transmission priority to each station by passing a token from one station to another and allows the station holding the token to transmit data. According to this system, construction of the logical ring (start-up and restart-up of the system, and joining and disjoining the logical ring) must be done by each of the stations.

However, according to this system, each of the stations which can hold the token must be equipped with a function to transmit invitation frames to other stations to invite them to join the logical ring, and the structure of the system tends to be complex. Also, an additional processing will be required to avoid conflicts and confusions when a plurality of stations respond to a same invitation frame. Therefore, according to this system, a high flexibility may be achieved, but the cost for the overall LAN system tends to be high.

Further, as an alternate transmission control system, the polling system is known. This system has the advantage of economy and simplicity as far as conducting 1:N communication is concerned, but is incapable of conducting N:N communication.

Furthermore, US-A- 4 745 598 discloses a communication system in a bus-type local area network, comprising a network control center and a plurality of bus interface units (BIUs) coupled to a common transmission line. The transmission line has first and second channels, wherein prospective entrants to the logical ring are solicited over the first channel and wherein information transfer among BIUs occurs over the second channel. The network control center is provided with a memory table for storing a status of each of said BIUs, polling means for inquiring each of said BIUs if it wishes to join a logical ring consisting of those BIUs which are available for communication or not, and updating means for revising contents of said memory table according to a result of said inquiry or polling by said polling means. Each of said network control center and said BIUs is provided with means for passing a token representing a transmission priority to one of said BIUs or the network control center adjoining thereto in said logical ring. However, in case the token is lost during the process of token passing it takes much time to recover the system from any disorder.

### BRIEF SUMMARY OF THE INVENTION

It is an object of the present invention to provide a bus-type LAN system, consisting of a master station and normal stations and based on a token passing communication system, which can quickly recover from any disorder even when one of the normal stations has failed to successfully pass the token to another one.

This problem is solved with the features of claim 1.

Thus, according to the present invention, since the logical ring is formed by a master station and normal stations, and the management and construction of the logical ring is performed only by the master station according to a polling system while the other normal stations performs only the passing of the token, the structure of the more numerous normal stations can be simplified and the overall cost of the LAN system can be thereby reduced. In addition, the system can be recovered quickly from any disorder in case the token is lost during the process of the token passing.

Particular embodiments of the invention are set out in the dependent claims 2 to 8.

Preferably, each of the normal stations is provided with response means for sending back a reply to the master station in response to the polling when the normal station changes its status in the logical ring, and the master station is provided with means for simultaneously informing a status of the logical ring to each of the normal stations, and each of the normal stations is provided with memory means for storing the status of the logical ring informed by the master station. Thereby, information on the conditions of all the normal stations is collected at the master station, and the constructing of a logical ring is simplified.

If the memory means of each of the normal stations stores an address of the normal station and an address of another station which is next, in the logical ring, to the normal station in the memory table, the normal station can readily locate the next station to which the token is to be passed. Also, by updating the memory table, the updating of the next station to which the token is to be passed can be updated without any delay.

If the polling is to cover all the normal stations for each polling process, a significant communication time will be taken up by the construction and maintenance of the logical ring, and communication efficiency is impaired. Therefore, it is preferred that polling by the master station is carried out every time the token has been passed completely around the logical ring, and covers only a part of an entirety of the normal stations, those normal stations not covered by the polling being covered by subsequent pollings by the master station.

For more efficient operation of the communication system, it is preferred that the memory table of the master station stores not only the status of the normal stations belonging to the logical ring but also the normal stations not belonging to the logical ring.

To quickly recover the system from any disorder in case of a failure in the master station, according to another embodiment of the present invention, at least one of the normal stations is provided with means for detecting a failure in the master station, and means for activating the normal station as a new master station upon detection of the failure in the master station. If desired, it is possible to provide a plurality of such potential master stations, or even all the normal stations may consist of such potential master stations.

### BRIEF DESCRIPTION OF THE DRAWINGS

Now the present invention is described in the following with reference to the appended drawings, in which:
Figure 1 is a schematic overall view of a bus-type LAN system to which the present invention is applied;
Figure 2 is a simplified block diagram illustrating the internal structure of the master station;
Figure 3 schematically illustrates the structure of the network management information table;
Figure 4 schematically illustrates the polling protocol;
Figure 5 schematically illustrates the different time phases for constructing a logical ring and conducting data communication;
Figure 6 is a flow chart illustrating the operation of the master station as it constructs a logical ring and conducts data communication;

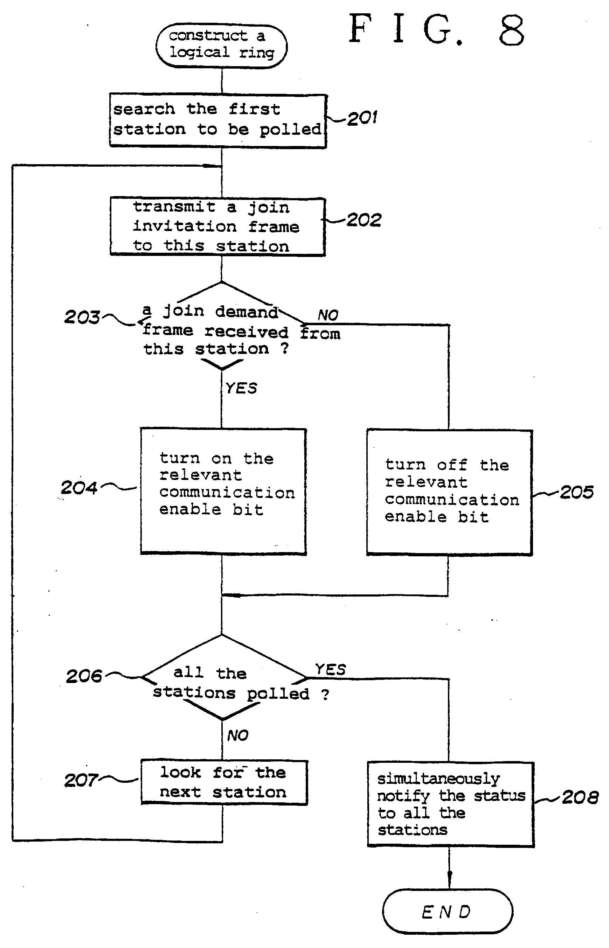

Figure 7 schematically illustrates the logical ring through which the token is sequentially passed from one station to another for N:N data communication;
Figure 8 is a flow chart illustrating the operation of another embodiment of the master station as it constructs a logical ring and conducts data communication;
Figure 9 is a flow chart illustrating the operation of another embodiment of the normal station as it conducts data communication;
Figure 10 schematically illustrates the structure of the address area 30c of itself and the address area 30d of the succeeding station;
Figure 11 is a flow chart illustrating the operation of yet another embodiment of the master station as it constructs a logical ring and conducts data communication;
Figure 12 is a flow chart illustrating the operation of yet another embodiment of the normal station as it conducts data communication and updates its own network management information table;
Figure 13 schematically illustrates a frame;
Figure 14 is a table showing various frames and their functions;
Figure 15 schematically illustrates the structure of another network management information table;
Figure 16 schematically illustrates the process of polling carried out by the master station in time sequence;
Figure 17 is a flow chart illustrating the operation of yet another embodiment of the master station as it constructs a logical ring and conducts data communication;
Figure 18 is a flow chart illustrating the operation of yet another embodiment of the normal station as it responds to polling and conducts data communication;
Figure 19 is a flow chart illustrating the interaction between the master station and one of the normal stations;
Figures 20a and 20b are timing charts illustrating the command frames which are transmitted through the communication line according to a conventional method and according to the present invention, respectively;
Figure 21 schematically illustrates the structure of the network management information table according to yet another embodiment of the present invention;
Figure 22 schematically illustrates the process of managing the network system; and
Figure 23 is a time chart illustrating the process of managing the network system in time sequence.

### DESCRIPTION OF THE PREFERRED EMBODIMENTS

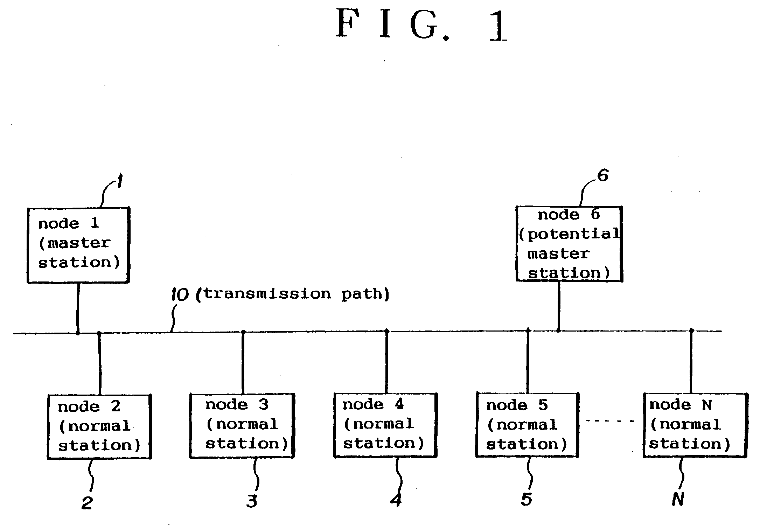

Figure 1 is a view illustrating the structure of a bus-type LAN system according to the present invention.

Referring to this drawing, a bus-type LAN is formed by connecting nodes 1 through N to a transmission path 10 which may consist of a coaxial cable or the like. The node 1 corresponds to a master station, and the other nodes 2 through N correspond to normal stations. The node 6, beside from being a normal station, is assigned as a back-up master station which is capable of operating as a master station when the node 1 (master station) has become inoperative. The master station 1 is a station equipped with the functions of maintaining and constructing a logical ring in addition to its normal function of a node of a bus-type LAN.

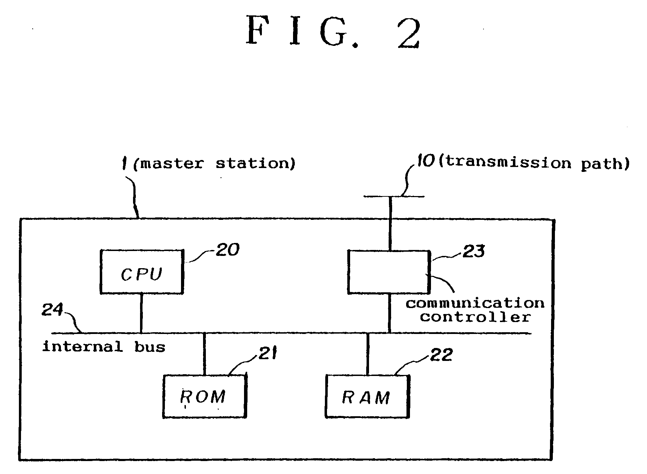

Figure 2 is a block diagram of the internal structure of the master station 1. As shown in this drawing, the master station comprises a CPU 20, ROM 21, RAM 22, a communication controller 23, and an internal bus 24 connecting these parts together. The CPU 20 conducts transmission and reception of various frames through the transmission path 10 by controlling the communication controller 23 according to a program stored in the ROM 21, and additionally constructs a logical ring based on a polling system according to a main concept of the present invention. Each of the normal stations may have a similar structure or a more simplified structure as desired.

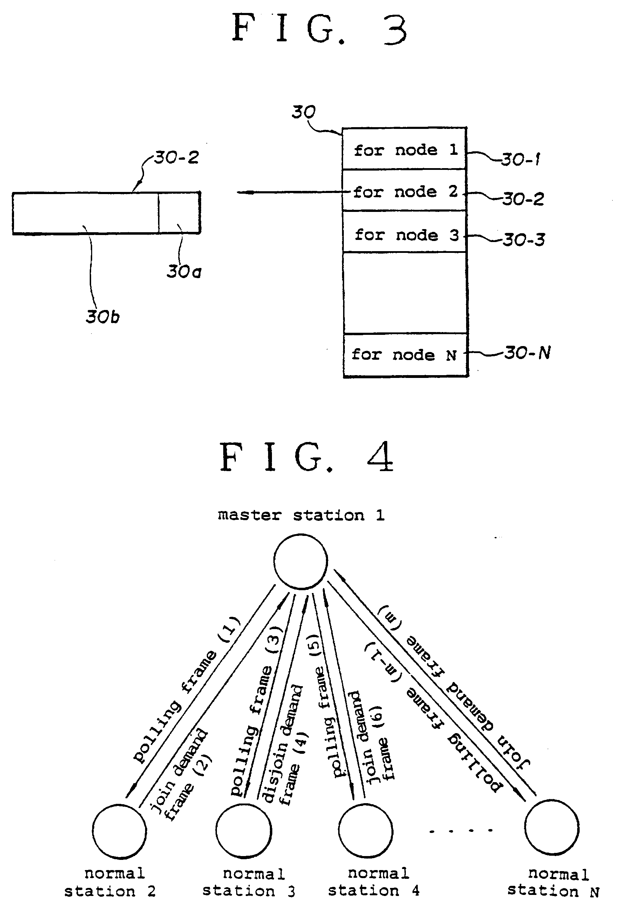

Figure 3 shows the contents of a network management table 30 provided in the RAM 22. The table 30 contains various pieces of management information related to the nodes on the network, and the memory addresses of the table 30 correspond to the node numbers of the nodes 1 through N. The memory areas include communication enable bits 30a which indicate for each of the associated nodes, for instance node 2, whether it is allowed to communicate or not, and memory areas 30b containing other information associated with each of the nodes, for instance node 2. The communication enable bit 30a of a particular node, for instance node 2, is set on when the node 2 joins a logical ring which is being constructed. In this way, when a logical ring is constructed, each of the nodes is set to either on or off, and the nodes which are set to on form a part of the logical ring. The order of passing the token in this logical ring is determined according to the order of the addresses of the nodes in the table memory 30.

Figure 4 illustrates the protocol according to which the master station 1 performs a polling for constructing a logical ring.

Referring to this drawing, arrows 1 through m denote the frames which are exchanged between the master station 1 and the normal stations 2 through N, and the frames are exchanged in the order of the numbers of the frames.

First of all, a polling frame (1) is transmitted from the master station 1 to the normal station 2 inviting the normal station 2 to join the logical ring. The normal station 2 then returns a join demand frame (2) to the master station 1 if the normal station wishes to join the logical ring. Likewise, polling frames (3), (5) ... (m-1) are transmitted from the master station 1 to the normal stations 3, 4, ... n, respectively, and the normal stations 3, 4, ... n which have received these invitations return join demand frames to the master station 1 if they wish to join the logical ring. If any of the normal stations do not wish to join the logical ring, disjoin frames are returned from these normal stations to the master station. In such a case as well as when there are no reply from any particular normal station to the polling frame transmitted from the master station, the relevant normal station is eliminated from the logical ring.

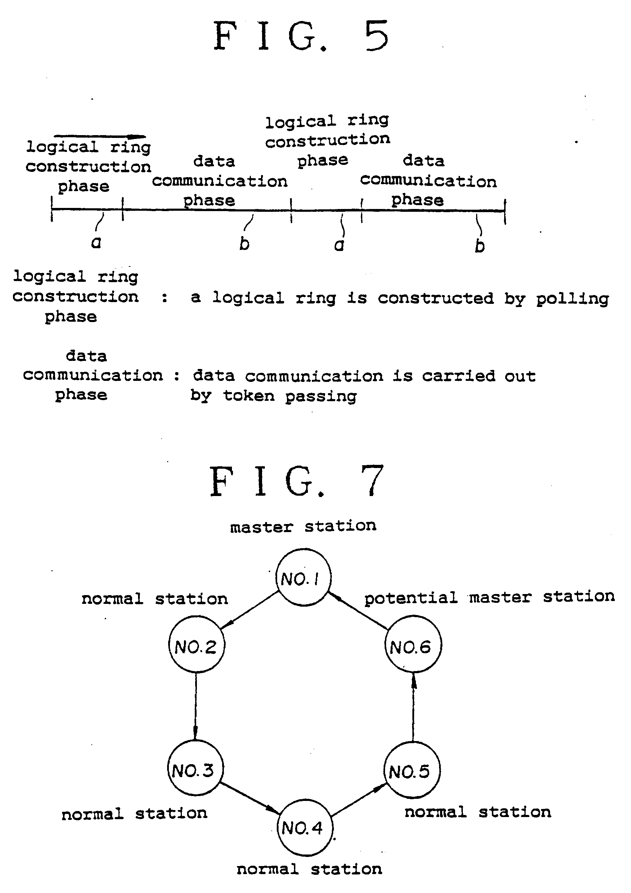

Figure 5 illustrates the process of constructing a logical ring and conducting data transmission in time sequence. According to the present invention, time is divided between a logical ring construction phase a for constructing a logical ring, and a data communication phase b for conducting data communication, and these two phases a and b occur in alternating sequence.

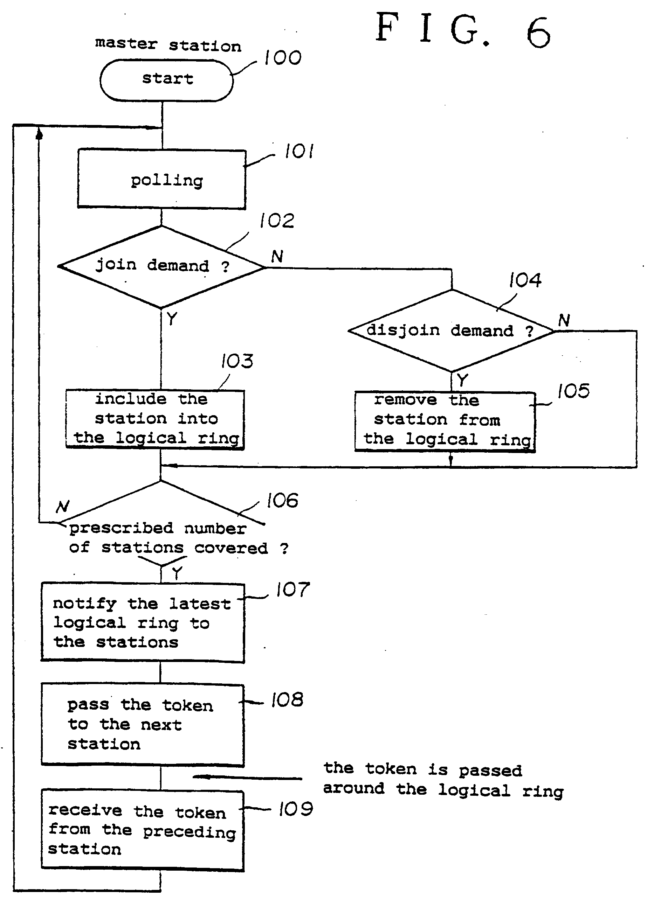

Figure 6 is a flow chart describing the operation of the master station during the construction of a logical ring and data communication.

First of all, the station which has received a network parameter from a user before any other stations that have been started up becomes the master station, and starts its operation (step 100).

During the construction phase a, the master station 1 conducts a polling to the node addresses of all the stations which have been included in the system in a sequential manner, and inquires are made for join demands one by one (steps 101 and 102).

If a join demand is encountered as a result of the inquiry (yes in step 102), the station is included in the logical ring (step 103), and the communication enable bit 30a in the corresponding normal station memory area of the network management information table 30 is turned on. On the other hand, if there is no join demand (no in step 102), and a disjoin demand from the logical ring is encountered (yes in step 104), the station is removed from the logical ring (step 105), and the corresponding communication enable bit 30a is turned off. If there is no disjoin demand from the logical ring (no in step 104), the system flow advances to step 105.

According to the present invention, a polling covering a number of stations is conducted for each logical ring construction phase a, and all the stations are subjected to polling after performing a certain number of logical ring construction phases a. It is determined in step 106 that a specified number of stations have been polled by each logical ring construction phase, and if it is found that a specified number of stations have not been polled (no in step 106) during any particular logical ring construction phases a, the system flow returns to step 101 and the above described action is repeated so as to inquire the intention to join the logical ring and decline to join the logical ring.

On the other hand, if a specified number of stations have been polled, the latest logical ring is notified to each of the stations (step 107) including the newly joined station, and construction of a logical ring is concluded.

During the data transmission phase b, the token is passed from the master station 1 to the next station (step 108), and the token is subsequently passed from one normal station to another through the logical ring so that only the station holding the token may be able to transmit data. When the token is returned to the master station after going completely round the logical ring (step 109), the data communication phase is terminated, and the preceding logical ring construction phase is resumed.

In short, according to the present embodiment, pollings are performed on the nodes 2 through N during each logical ring construction phase to thereby construct or renew the logical ring, and it is followed by a data communication phase in which the master station notifies the latest logical ring to all the stations followed by the onset of the data communication phase.

The replies to the polling during the logical ring construction phase may include a join demand, a disjoin demand, no response (no demand for joining the logical ring), a response without any reply (demand for maintaining the current state), the master station 1 is additionally equipped with the function of transmitting and receiving data.

As can be seen from the above described embodiment, since a logical ring is constructed and managed by a master station according to a polling system whereas the normal stations are dedicated to transmission and reception of data by passing of a token from one station to another in a sequential manner through the logical ring, the transmission of data being allowed to one of the normal stations holding the token, the overall LAN system can be constructed economically.

Figure 8 illustrates a modified embodiment of the process of constructing a logical ring by the master station. First of all, a normal station is selected as a subject of polling in step 201, and this station is typically selected as the normal station 2 corresponding to the lowest address in the network management table 30 of the master station. Then, a polling frame is transmitted from the master station to the normal station 2 in step 202, and it is determined whether the reply from the normal station 2 is a demand for joining the logical ring or not in step 203.

If a join demand frame is received by the master station (yes in step 203), the communication enable bit 30a in the associated part of the network management table 30 is turned on in step 204. If no join demand frame is received by the master station or there is no reply (no in step 203), the communication enable bit 30a in the associated part of the network management table 30 is turned off in step 205.

It is then determined in step 206 whether the polling frames have been sent to all the normal stations that are to be covered. If the polling frames have not been sent to all the normal stations (no in step 207), the next station to be polled is selected in step 207, and the program flow returns to step 202. If the polling frames have been sent to all the stations that are to be covered (yes in step 206), the network management information covering all the information on the normal stations stored in the network management information table 30 is transmitted to all the normal stations at the same time in step 208, and this concludes one cycle of the operation of the master station.

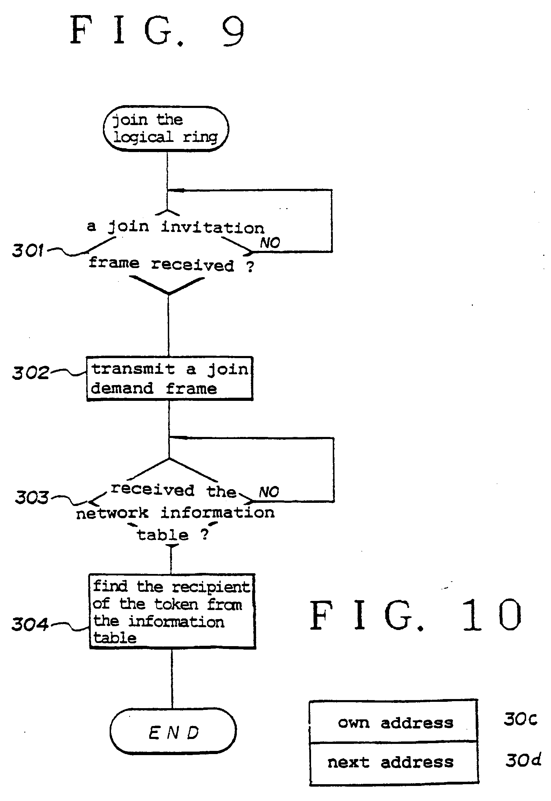

Figure 9 illustrates the operation of one of the normal stations as it joins the logical ring.

Initially, the normal station awaits for a polling frame from the master station in step 301. Upon reception of a polling frame, the normal station returns a join demand frame in step 302 and awaits for network management information to be sent from the master station in step 303. When the network management information is received, the station which has an enabled communication enable bit 30a is searched in the ascending order of the addresses of the normal stations in the network management information table 30, and the first encountered one is assigned as the next station to which the token is to be passed.

As can be understood from the above description, according to the present embodiment, polling is conducted by the master station, and the results of the polling are not only stored in the network management table of the master station but also transmitted to all the normal stations at the same time. Therefore, each station can pass the token to the next normal station in the logical ring according to the contents of the network management information table 30 received from the master station, following the completion of data transmission.

When the token is passed to the normal station which corresponds to the last one in the network management information table 30 having an enabled communication enable bit 30a, as there is no possible recipient of the token in the subsequent addresses, the network management information table 30 is searched from the beginning, thereby forming an endless logical ring.

If the status of the entire system is notified to each of the normal stations, each normal station is capable of finding the next station in the logical ring. However, this notification to each of the normal station inevitably occupies a significant part of communication time, and the communication efficiency of the system tends to be impaired. The embodiment illustrated in Figures 10 through 12 simplifies the process of notifying the status of the system to each of the normal stations without interfering with the proper maintenance of the logical ring.

Figure 10 illustrates the contents of memory in the RAM included in each of the normal stations. This memory contains an address area 30c for storing its own address in the network management information table 30, and another address area 30d for storing the address of the station which is next to the normal station in question among the stations having enabled communication enable bits 30a or, in other words, the next station in the logical ring.

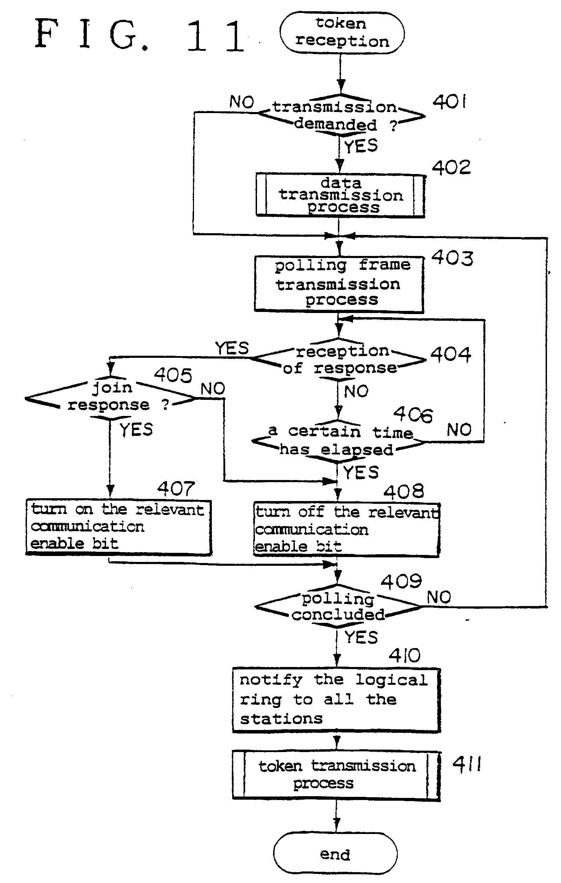

Referring to Figure 11 which illustrates the operation of the master station following reception of a token, if there are data to be transmitted from the master station (yes in step 401), the master station carries out a data transmission in step 402. Upon completion of data transmission or if there are no data to be transmitted (no in step 402), the master station carries out a polling process.

In this polling process, the master station sends out a polling frame to each of the normal stations in the order as they appear in the network management information table 30 (step 403), or polls each of the normal stations. If a response is received from any particular normal station (yes in step 404) and the content of the response consists of a join demand frame (yes in step 405), the associated communication enable bit 30a of the normal station is turned on in step 407.

On the other hand, if the content of the response does not consist of a join demand frame (no in step 405) or no response is received within a certain time interval (no in step 404 and yes in step 406), the associated communication enable bit 30a of the normal station is turned off in step 408. In this way, the communication enable bits 30a are updated, and the logical ring is renewed.

Upon completion of a polling of any particular normal station, the number of the stations covered by the current polling process is counted, and polling the next station is continued (step 403) as long as this count falls short of a predetermined value (no in step 409). When the predetermined number of normal stations have been covered (yes in step 409), the polling process is terminated, but the station next to the last polled station and the subsequent stations are polled in the next polling process.

Here, the number of the normal stations covered by each polling process is limited so that the overhead of the master station may not be excessive and more communication time may be allocated for data transmission. In other words, if all the normal stations were covered by each polling process, a considerable part of the communication time must be utilized for polling and the efficiency of data communication would be impaired, an accordingly less time being allocated for data communication.

Upon completion of each polling process, the contents of the renewed network management information table 30 are notified to all the normal stations simultaneously in step 410. Thereafter, the master station sends out the token to the next station according to the network management information table 30, and terminates its operation after receiving an acknowledgment of reception of the token by the next station in step 411.

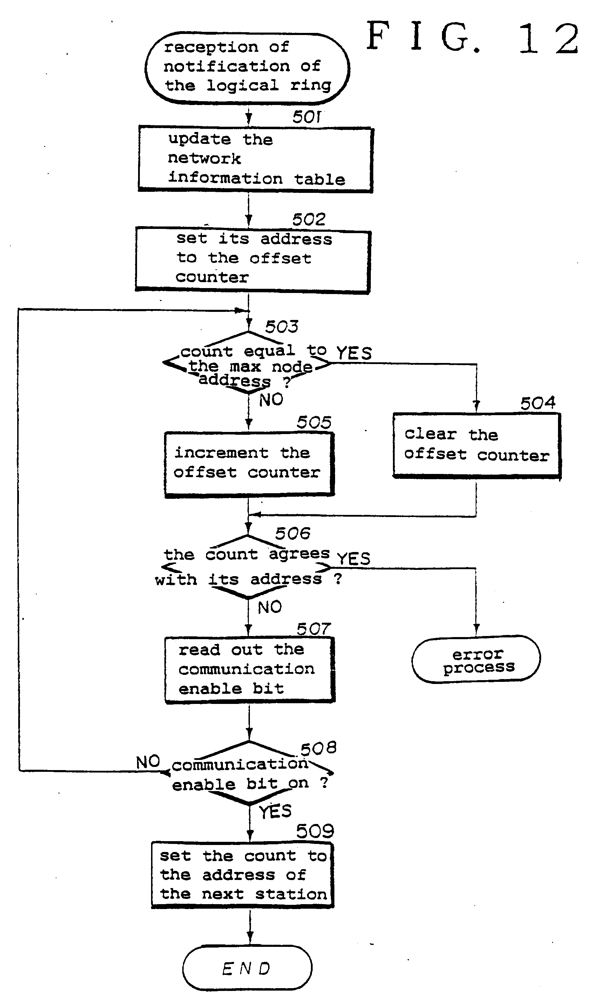

Figure 12 shows the process of updating the address area 30d for the next station at each of the normal stations 2 through N. Referring to Figure 12, the normal station updates its network management information table 30 upon reception of data on the communication enable bits 30d in the simultaneous transmission from the master station (step 501). Then, the address of the memory in which the data related to the normal station in question is set up in an offset counter included in its internal RAM in step 502.

If the value set up in the offset counter is equal to the maximum value of the communication node address in the network management information table 30 or, in other word, it is found to be the last address (yes in step 503), the offset counter is cleared, or the value is replaced by the first address in step 504. If the value does not agree with the maximum value of the communication node address (no in step 503), the offset counter is incremented in step 505.

It is then determined in step 506 whether the value set up in the offset counter agrees with its own address or not. If they agree with one another (yes in step 506), it means that no other stations belong to the logical ring, and an error process is carried out. If they disagree (no in step 506), the communication enable bit 30a in the memory area in the network management information table corresponding to the address set up in the offset counter is read out in step 507. If the communication enable bit 30a which has been read out is found to be off (no in step 508), the program flow returns to step 503.

If the communication enable bit 30a which has been read out is found to be on (yes in step 508), the value set up in the offset counter is set up in the address area 30d for the next station in step 509. This concludes the process at the normal station. In this way, the address of the next station is updated quickly and simultaneously at each of the normal stations.

Thus, according to this embodiment, the process at each station is repeated every time the token is passed entirely around the logical ring, and the updating of the list of the stations belonging to the logical ring can be accomplished in a short time. Furthermore, the master station is not burdened by any overhead in constructing the logical ring, and can keep the communication line available for data communication most of the time by minimizing the use of the communication line for construction and maintenance of the logical ring.

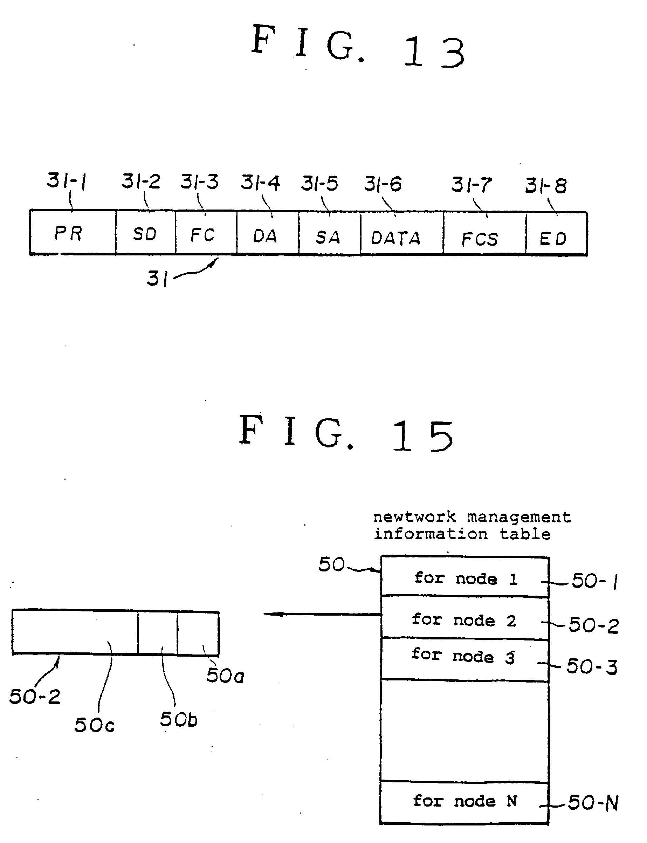

Figures 13 through 18 pertain to yet another embodiment of the present invention.

Figure 13 illustrates the format of a frame 31 which is transmitted from the communication controller 23. The part PR denoted by numeral 31-1 is a preamble for synchronization at the time of frame reception, the part SD denoted by numeral 31-2 is a start delimiter for indicating the start of the frame, the part FC denoted by numeral 31-3 is a control field for indicating the kind of the frame, the part DA denoted by numeral 31-4 is a destination address for indicating the address of the destination of the frame, the part SA denoted by numeral 31-5 is a source address for indicating the address of the sender, the part DATA denoted by numeral 31-6 is an area for placing the contents of the data, the part FCS denoted by numeral 31-7 is an area for placing a frame check sequence, and the part ED denoted by numeral 31-8 is an end delimiter for indicating the end of the frame.

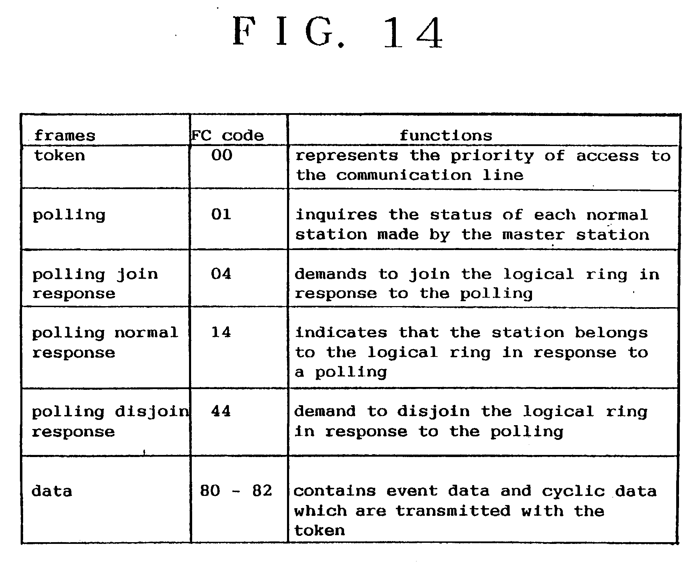

Figure 14 summarizes the kinds of frames and their functions. According to the present embodiment, there are six kinds of frames, and are classified by two-digit codes contained in the control field FC shown in Figure 13. FC code "00" represents a token frame, and the station which has received this frame automatically obtains a priority in the access to the communication line, and if it has any data to be transmitted, it transmits its data using data frames having FC codes "80" through "82". FC code "01" represents a polling frame, and is used by the master station to know the status of the normal stations. The normal station which has received this frame returns a polling join response frame, a polling normal response frame, or a polling disjoin response frame to the master station.

The polling join response frame is represented by FC code "04", and is used when a normal station which does not belong to a logical ring is about to join the logical ring. The polling normal response frame is represented by FC code "14" and is used when a normal station which belongs to a logical ring is going to stay in the logical ring. The polling disjoin response frame is represented by FC code "44" and is used when a normal station which belongs to a logical ring is going to disjoin or leave the logical ring or when a normal station which does not belong to a logical ring is going to stay away from the logical ring.

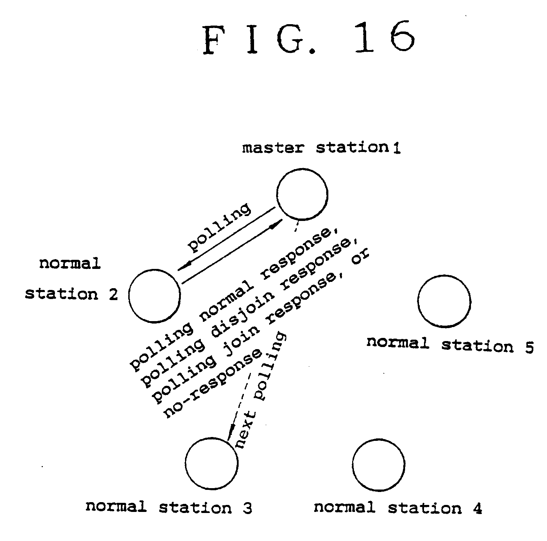

Figure 15 illustrates the contents of a network management information table 50 included in the RAM 22. The table 50 stores various pieces of information on the communication nodes in the network, and the memory addresses of the table 50 correspond to the node numbers of the communication nodes 1 through N. Each memory area of the table, for instance the memory area 50-2, comprises a communication enable bit 50a which indicates whether the associated communication node belongs to the logical ring or, in other words, is communication enabled or not, a no-response bit 50b for indicating whether the normal station node has responded to a polling by the master station or has not responded to the polling, and an area 50c for storing management information on the node 2.

When the no-response bit 50b is turned on, it means that a failure has occurred at the node or the power to the node has not been turned on. The communication enable bit 50a is turned on when the node 2 has joined a logical ring. When a logical ring is constructed, the communication enable bit 50a of each of the communication nodes is either turned on or off. The logical ring is constructed by those nodes which have turned-on communication enable nodes in the order of their addresses.

Figure 16 shows the sequence of polling which is carried out by the master station 1. The master station 1 counts one cycle when the token has passed completely around the logical ring, and when the count of the token passing cycles has reached a predetermined value, a polling is carried out on each of the normal stations along the communication line. The number of frames which are transmitted at each polling process is also set up as a system parameter. In the illustrated embodiment, the number of frames is selected as one.

Referring to Figure 16, first of all, the master station 1 transmits a polling frame to the normal station 2 according to the order of the addresses of the normal stations in the table 50. If the polled normal station 2 is functioning normally, it returns a polling join response frame, a polling normal response frame or a polling disjoin frame, depending on the state of the particular normal station. If the normal station 2 is not functioning normally, for instance if the power to the normal station is not turned on or a failure has occurred at the normal station, there is no response. From the response to the polling, the status of the normal station 2 is identified, and is stored in the corresponding address of the memory area of the table 50.

Thereafter, the master station proceeds to the process of passing the token through the logical ring, and, after carrying out this process, resumes the process of polling. This polling process is now directed to the station, for instance the normal station 3, which is next to the previously polled normal station in the order of the addresses of the table.

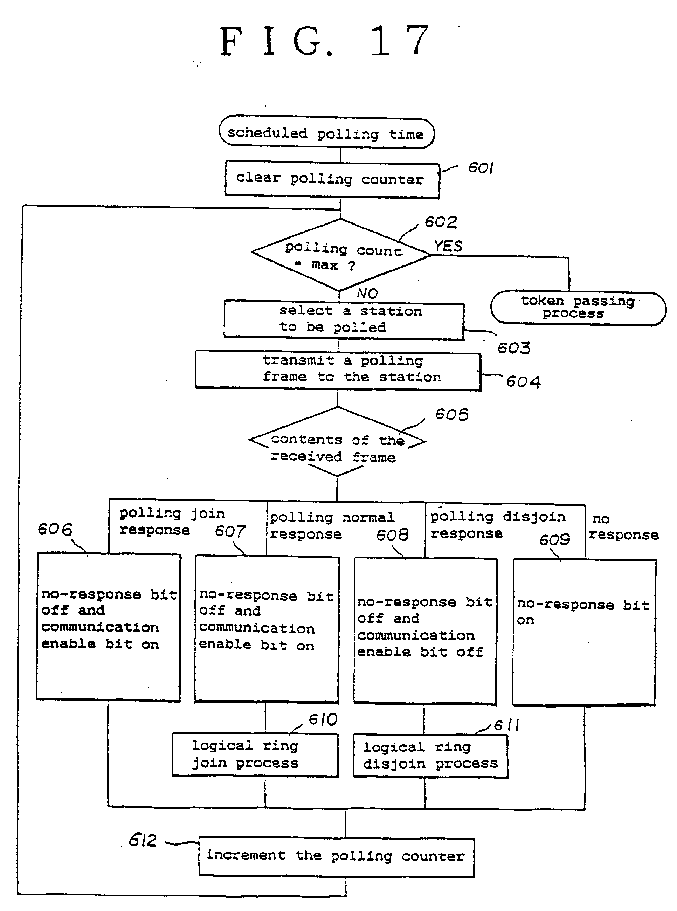

Figure 17 shows the process of finding the status of each normal station by the master station 1. Referring to this drawing, when the token is returned to the master station and a polling process is about to be started, the count of the number of polling stored in a counter included in the RAM 22 is cleared in step 601. The count of this counter is compared with a certain system parameter in step 602. If they agree with each other (yes in step 602), the program flow advances to a token passing process. If the count of the counter is less than the system parameter (no in step 602), the master station selects a normal station to which a polling frame is to be transmitted in step 603. The address of this normal station is next to that of the other normal station to which the last polling frame was transmitted. The master station transmits a polling frame to this selected normal station in step 604, and awaits a response from this normal station ins tep 605.

When the response consists of a polling normal response frame, the communication enable bit 50a of the relevant memory area of the table 50 is turned on while the nor-response bit 50b is turned off in step 606. When the response consists of a polling join response frame, the communication enable bit 50a of the relevant memory area of the table 50 is turned on while the no-response bit 50b is turned off in step 607, and, further, a process of including this normal station into the logical ring is performed as required in step 610. When the response consists of a polling disjoin response frame, the communication enable bit 50a of the relevant memory area of the table 50 is turned off while the no-response bit 50b is turned off in step 608, and, further, a process of removing this normal station from the logical ring is performed as required in step 611. When there is no response, the no-response bit 50b of the corresponding memory area in the table 50 is turned on in step 609.

When steps 606 through 611 are completed, the count of the number of polling is incremented in step 612, and the program flow returns to step 602. And, this process is repeated until the count of the number of polling reaches the predetermined system parameter value.

According to this embodiment, the polling was started when the token has been returned to the master station and a certain time point in the operation schedule has been reached, but it is also possible to carry out a polling process only when the time period for passing the token has not been completely used up.

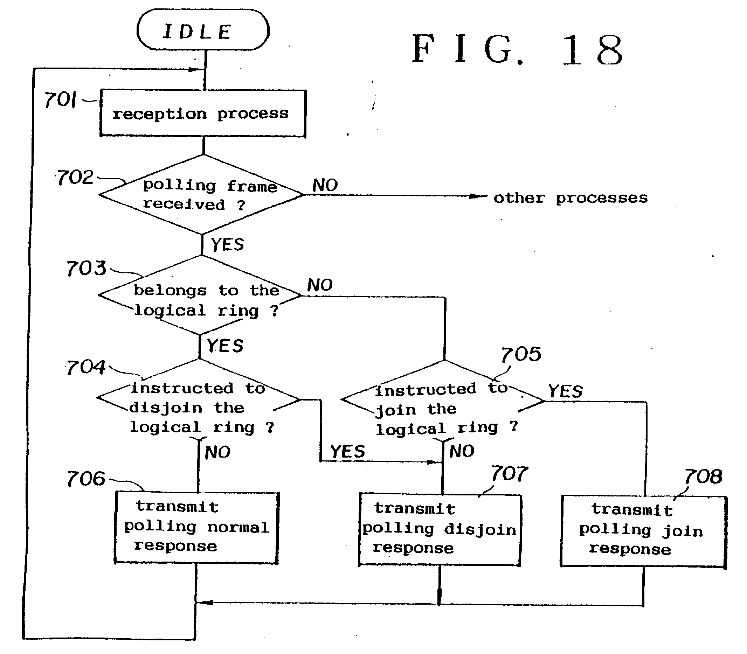

Figure 18 illustrates the operation of a normal station when it has received a polling frame from the master station. Referring to this drawing, the normal station receives various frames and identifies their contents in its idling condition in step 701. If the received frame is not a polling frame (no in step 702), a process corresponding to this particular frame is carried out.

If the received frame is a polling frame (yes in step 702), it is determined whether this normal station belongs to the logical ring or not, and whether it should join or stay in the logical ring according to a command from a higher level (steps 703 through 705). If the normal station belongs to the logical station and there is no command to leave the logical ring (yes in step 703 and no in step 704), the normal station transmits a polling normal response frame to the master station in step 706. If the normal station belongs to the logical ring but is instructed to leave the logical ring (yes in step 903 and yes in step 904), or if the normal station does not belong to the logical ring and is not instructed to join the logical ring (no in step 703 and no in step 705), the normal station returns a polling disjoin response frame to the master station 1 in step 707. When the normal station does not belong to the logical ring and is instructed to join the logical ring (no in step 703 and yes in step 705), the normal station returns a polling join response frame to the master station in step 708.

When the normal station has transmitted any one of the possible response frames, the program flow returns to step 701, and the normal station waits for another frame to be transmitted thereto.

The above described process is carried out when the normal station is functioning normally, and, for instance, when the power to the normal station has not been turned on or any failure has occurred to the normal station, no response frame is transmitted to the master station.

By carrying out the steps illustrated in Figures 17 and 18, the normal station l can collect and store not only information on the normal stations belonging to the logical ring but also information on the normal stations not belonging to the logical ring. By thus storing information on all the normal stations at all time in the network management information table 50, information on any particular normal station can be readily retrieved by looking up the communication enable bit 50a and the no-response bit of the particular normal station in the network management information table 50 as required.

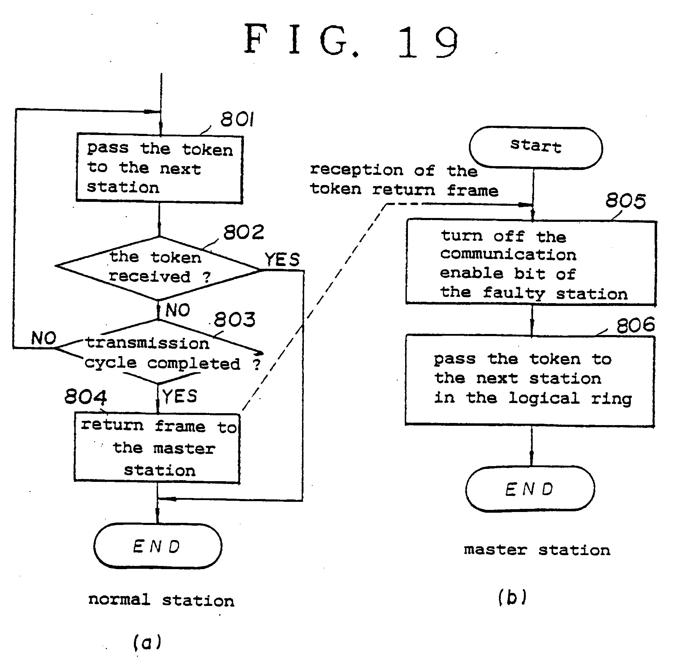

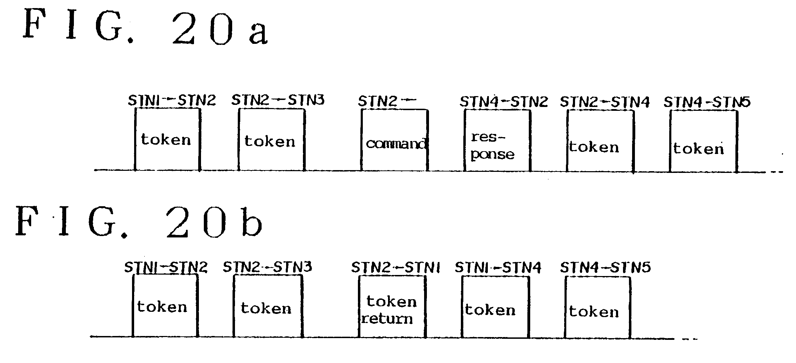

The embodiment illustrated in Figures 19 and 20 pertains to a communication system which is provided with means for preventing the loss of the token. Figure 19 illustrates the interaction between the master station and one of the normal stations.

Referring to Figure 19, the normal station which has just completed a data transmission process transmits a token frame to the next normal station in step 801. Then, it is determined whether the token has been safely passed on to the next station in step 802. This is accomplished by monitoring for a command frame or a token frame on the communication line 10 within in a certain time period after transmission of the token frame. When the transmission of such a frame is confirmed, it is determined that the token has been successfully passed to the next station (yes in step 802), and this concludes the token passing by this normal station.

When transmission of no such frame is found on the communication line 10, it is determined that the token has not been successful passed on to the next station (no in step 802), and the transmission of a token frame is carried out once more in step 801. This is repeated until a successful passing of the token has been confirmed or it has been repeated for a predetermined number of times as determined by a system parameter assigned to step 803. In the latter case, as it means that a certain failure has occurred at the next station and has prevented the next station to receive the token, the token is returned to the master station instead of passing it on to the next station by transmitting a token return frame in step 804, and this concludes the operation of the normal station.

Upon reception of the token transmitted from the normal station in step 805, the master station 1 identifies the address of the sender from the token return frame and the address of the next station, which is considered to be out of order, from the network management information table 50, and the communication enable bit 30a of this faulty station is turned off in step 805. Thereafter, the normal station which is next to this faulty station is found from the network management information table 50, and a token frame is transmitted to this station in step 806. This concludes the operation of the master station.

The data contained in the table 30 which has been thus updated are transmitted simultaneously to all or part of the normal stations, and the table 30 provided in each of the normal stations is also updated. Therefore, in the succeeding token passing process, the token is passed along a logical ring which is renewed according to the updated network management information table 50.

Figures 20a and 20b are time charts illustrating the transmission of a command frame when a failure has occurred at one of the normal stations, for instance the normal station 3, according to a conventional method and the present embodiment, respectively.

According to this conventional method, as shown in Figure 20a, when a token frame is transmitted from the normal station 2 to the normal station 3 but no response is received by the normal station 2, a command frame is transmitted from the normal station 2 to the normal station 4 which is next to the station 3. The normal station returns a response frame to the normal station 2, and the normal station 2 then pass the token to the normal station 4.

On the other hand, according to the present embodiment, as shown in Figure 20b, when a token frame is transmitted from the normal station 2 to the normal station 3 but no response is received by the normal station 2, the token is immediately returned to the master station 1. Then, the master station 1 looks up the network management information table, and passes the token to the next normal station along the logical ring. As a result, the recovery from the failure to pass the token can be quickly made, and loss in communication efficiency is thus reduced. Also, each normal station is not required to be capable of finding the next normal station along the logical ring, and the structure thereof can be simplified.

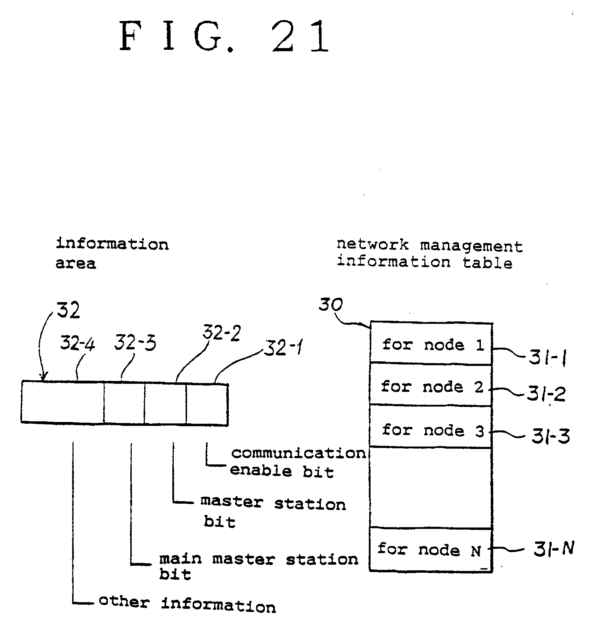

The embodiment illustrated in Figures 21 through 23 pertains to an embodiment which is provided with means to quickly regain the system even when a failure has occurred at the master station. According to this embodiment, at least one of the normal stations is provided with a structure which can selectively enables it to function as a master station. If desired, two or more of the normal stations or even all the normal stations may be equipped with such a function.

Figure 21 illustrates the contents of the network management information table 30 which is included in the RAM of one of the normal stations. Memory areas 31-1 through 31-N corresponds to communication nodes 1 through N which are connected to the communication line 10. Numeral 32 denotes one of the memory areas 31-1 through 31-N shown in greater detail. The memory area 32 comprises a communication enable bit 32-1 which indicates if the corresponding communication node belongs to the logical ring or not, a master station enable bis 32-2 indicating if the corresponding node is provided with the function to act as a master station or not, a main master station bit 32-3 which indicates if the corresponding node is a main master station or not, and an information memory area 32-4 which contains other information related to this node.

Initially, a polling is periodically conducted by the main master station, whose main master station bit 32-3 is turned on, on the normal stations, and updates the network management information table 30 so that the contents may be informed to all the normal stations at the same time.

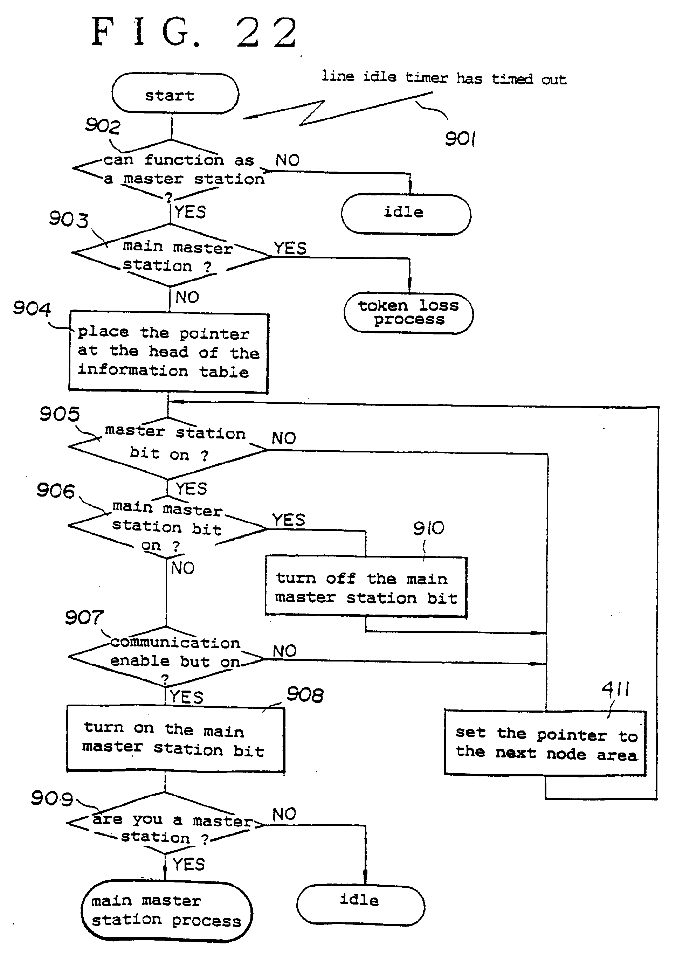

Figure 22 illustrates the process of taking over the main master station by a normal station having a potential capability to function as a master station. Initially, the communication controller monitors frame transmission occurring on the communication line 10, and activates a line idle timer whenever absence of frame transmission is detected. If a frame is transmitted thereafter, the line idle timer is reset. When the line idle timer has timed out after elapsing of a certain time interval during which no transmission took place on the communication line, it interrupts the CPU 20 in step 901. Upon occurrence of this interruption, the CPU 20 determines whether the station in question has the function of a master station or not by looking up the memory area 32-2 of the RAM 22 in step 902. If the station is not equipped with the function of a master station, the station goes into an idling condition (no in step 902).

If the station in question is equipped with the function of a master station, it determines in step 903 if it is a main master station or nor by looking up the memory area 32-3 of the RAM 2. If it is the main master station, it means that the token may possibly have been lost, and the system flow advances to a token loss processing (no in step 903).

If it is not a main master station, as it may mean that the main master station has failed, a pointer for searching the main master station is set up at the first area of the network management information table 30 in step 904. Initially, the pointer is assigned to the node of least address on the communication line, and its memory area 32-2 is checked if it is on or not in step 905. If the associated bit is found to be off, as it means that the associated node is not equipped with the function of a master station, the pointer is advanced to look for the succeeding addresses in steps 911 and 905.

If the master station 1 is on (yes in step 905), it is further determined if the station is a main master station or not by looking up its memory area 32-3 in step 906. If the main master station bit is on (yes in step 906), as it means that this node has been the master station until that moment, the main master station bit is turned off in step 910, and the pointer is set to the next node in step 911 before the system flow returns to step 905. If the main master station bit is found to be off (no in step 906), it is determined whether the memory area 32-1 is on or not in step 907. If the corresponding communication enable bit is off (no in step 907), the pointer is set to the next node in step 911, and the program flow returns to step 905. If the associated communication enable bit is found to be on (yes in step 907), the main master station bit of the corresponding node is turned on, and this node is now selected as the new main master station in step 908. Thereafter, the address of the newly selected main master station is compared with the normal station in question in step 909, and if they agree with each other, the station in question is acknowledged as a main master station, and it starts functioning as a main master station.

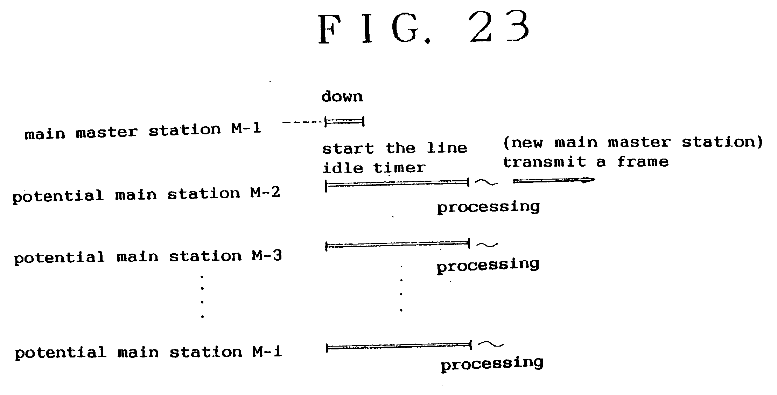

Figure 23 is a time chart showing how a new main master station is selected according to the process shown in Figure 22. The idle timers of the potential master stations M-2 through M-i are given with a same timer value. The timer value of the main master station M-1, however, may be set to a small value so that its can revive the token when it is lost.

If the main master station M-1 fails, the line idle timers of all the potential main stations M-2 through M-i are activated at the same time. When the line idle timers have timed up, the potential master stations carry out the process shown in Figure 22, and the node having the lowest address is selected from those which have turned-on master station bits, turned-off main master station bits, and turned-on communication enable bits is selected as the new main master station. In the illustrated example, the potential master station M-2 is selected as the new main master station, and conducts a frame transmission as a master station before it moves on to data transmission through the prescribed steps.

Thus, according to the present embodiment, when the master station has failed, since the master station is quickly taken over by a newly selected master station from those having the functions to be a master station according to the order of their addresses in the associated network management information table, there is no possibility of transmitting mutually conflicting frames on the communication line, and transition between data communication and management of the logical ring can be accomplished smoothly. Also, by eliminating any unnecessary algorithm processes, the structure of the hardware and software for changing the master station can be much simplified.

## Claims

1. A communication system in a bus-type local area network, comprising:
a master station (1), and a plurality of normal stations (2 to N); the master station (1) being provided with a memory table (30; 50) for storing a status of each of said normal stations (2 to N), polling means for inquiring each of said normal stations (2 to N) if it wishes to join a logical ring consisting of those stations which are available for communication or not, and updating means for revising contents of said memory table (30; 50) according to a result of said inquiry or polling by said polling means, and each of said master station (1) and said normal stations (2 to N) being provided with means for passing a token representing a transmission priority to one of said stations (1 to N) adjoining thereto in said logical ring, **characterized** in
that each of said normal stations (2 to N) is provided with means for sending an acknowledgment of reception of said token to the sender of said token, means for receiving an acknowledgment of reception of said token from the station which has received said token from said normal station, and means for returning said token to said master station (1) when said normal station has passed said token to the next station and has failed to receive said acknowledgment from said next station;
that said master station (1) is provided with means for removing said next station which has failed to send an acknowledgment from said logical ring, and means for passing said token to another station which is next in said logical ring to said next station, and
that the polling to construct the logical ring and the data communication between the network stations (1 to N) occur in alternating phases on the bus (10).

2. A communication system according to claim 1, wherein each of said normal stations (2 to N) is provided with response means for sending back a reply to said master station (1) in response to said polling when said normal station changes its status in said logical ring.

3. A communication system according to claim 1 or 2, wherein said master station (1) is provided with means for simultaneously informing a status of said logical ring to each of said normal stations (2 to N), and each of said normal stations (2 to N) is provided with memory means (30) for storing said status of said logical ring informed by said master station (1).

4. A communication system according to claim 3, wherein said memory means (30) of each of said normal stations (2 to N) stores an address of said normal station and an address of another station which is next, in said logical ring, to said normal station in said memory table.

5. A communication system according to any of claims 1 to 4, wherein said polling by said master station (1) is carried out every time said token has been passed completely around said logical ring, and covers only a part of an entirety of said normal stations (2 to N), those normal stations not covered by said polling being covered by subsequent pollings by said master station (1).

6. A communication system according to any of claims 1 to 5, wherein said memory table (30; 50) of said master station (1) stores not only the status of the normal stations belonging to said logical ring but also the normal stations not belonging to said logical' ring.

7. A communication system according to any of claims 1 to 6, wherein at least one of said normal stations (2 to N) is provided with means for detecting a failure in said master station (1), and means for activating said normal station as a new master station (6) upon detection of said failure in said master station (1).

8. A communication system according to claim 7, wherein two or more of said normal stations (2 to N) are each provided with means for detecting a failure in said master station (1), means for activating said normal station as a new master station (6), and means for determining which of said qualified normal stations should be activated as a new master station (6).

## Patentansprüche

1. Ein Kommunikationssystem in einem lokalen Netz vom Bustyp, das aufweist:
eine Hauptstation (1) und eine Vielzahl normaler Stationen (2 bis N); wobei die Hauptstation (1) vorsieht eine Speichertabelle (30; 50) zum Abspeichern eines Zustands von jeder der normalen Stationen (2 bis N), eine Abrufeinrichtung zum Abfragen jeder der normalen Stationen (2 bis N), ob diese mit einem logischen Ring, der aus jenen Stationen besteht, die für eine Kommunikation verfügbar sind, verbunden werden möchte oder nicht, und eine Aktualisierungseinrichtung zum Ändern der Inhalte der Speichertabelle (30; 50) entsprechend einem Ergebnis der Abfrage oder des Abrufs durch die Abrufeinrichtung, und wobei jede von der Hauptstation (1) und den normalen Stationen (2 bis N) eine Einrichtung zum Hindurchlassen eines eine Übertragungspriorität darstellenden Token zu einer der Stationen (1 bis N) vorsieht, die an den logischen Ring angeschlossen wird,
dadurch **gekennzeichnet**,
daß jede der normalen Stationen (2 bis N)
ausgestattet ist mit einer Einrichtung zum Senden einer Empfangsbestätigung des Token zu dem Sender des Token, einer Einrichtung zum Empfangen einer Empfangsbestätigung des Token von der Station, die den Token von der normalen Station empfangen hat, und einer Einrichtung zum Rückgeben des Token zu der Hauptstation (1), wenn die normale Station den Token zur nächsten Station hindurchgelassen hat und es ihr nicht gelang, die Bestätigung von der nächsten Station zu empfangen;
daß die Hauptstation (1) eine Einrichtung zum Entfernen der nächsten Station, der es nicht gelang, eine Bestätigung vom logischen Ring zu senden, und eine Einrichtung zum Hindurchlassen des Token zu einer anderen Station vorsieht, die in dem logischen Ring die nächste zur nächsten Station ist, und
daß das Abrufen zum Aufbauen des logischen Rings und der Datenübermittlung zwischen den Netzwerkstationen (1 bis N) in abwechselnden Phasen auf dem Bus (10) auftritt.

2. Ein Kommunikationssystem nach Anspruch 1, wobei jede der normalen Stationen (2 bis N) eine Antworteinrichtung zum Zurücksenden einer Antwort zu der Hauptstation (1) in Erwiderung auf den Abruf vorsieht, wenn die normale Station ihren Zustand in dem logischen Ring ändert.

3. Ein Kommunikationssystem nach Anspruch 1 oder 2,
wobei die Hauptstation (1) eine Einrichtung zum gleichzeitigen Mitteilen eines Zustands des logischen Rings zu jeder der normalen Stationen (2 bis N) vorsieht und wobei jede der normalen Stationen (2 bis N) eine Speichereinrichtung (30) zum Abspeichern des durch die Hauptstation (1) mitgeteilten Zustands des logischen Rings vorsieht.

4. Ein Kommunikationssystem nach Anspruch 3,
wobei die Speichereinrichtung (30) jeder der normalen Stationen (2 bis N) eine Adresse der normalen Station und eine Adresse einer anderen Station, die in dem logischen Ring zu der normalen Station die nächste ist, in der Speichertabelle abspeichert.

5. Ein Kommunikationssystem nach irgendeinem der Ansprüche 1 bis 4,
wobei das Abrufen durch die Hauptstation (1) jedesmal ausgeführt wird, wenn der Token vollständig um den logischen Ring herumgelaufen ist, und nur einen Teil einer Gesamtheit der normalen Stationen (2 bis N) abdeckt, wobei jene normalen Stationen, die durch das Abrufen nicht abgedeckt wurden, durch nachfolgende Abrufe durch die Hauptstation (1) abgedeckt werden.

6. Ein Kommunikationssystem nach irgendeinem der Ansprüche 1 bis 5,
wobei die Speichertabelle (30; 50) der Hauptstation (1) nicht nur den Zustand der zu dem logischen Ring gehörenden normalen Stationen sondern auch den der nicht zu dem logischen Ring gehörenden normalen Stationen abspeichert.

7. Ein Kommunikationssystem nach irgendeinem der Ansprüche 1 bis 6,
wobei zumindest eine der normalen Stationen (2 bis N) eine Einrichtung zum Erfassen eines Fehlers in der Hauptstation (1) und eine Einrichtung zum Aktivieren der normalen Station als neue Hauptstation (6) nach dem Erfassen des Fehlers in der Hauptstation (1) vorsieht.

8. Ein Kommunikationssystem nach Anspruch 7,
wobei zwei oder mehr der normalen Stationen (2 bis N) jeweils eine Einrichtung zum Erfassen eines Fehlers in der Hauptstation (1), eine Einrichtung zum Aktivieren der normalen Station als neue Hauptstation (6) und eine Einrichtung zum Bestimmen vorsieht, welche der geeigneten normalen Stationen als neue Hauptstation (6) aktiviert werden soll.

## Revendications

1. Système de communication dans un réseau local de type bus, comprenant :
une station maître (1) et une pluralité de stations normales (2 à N), la station maître (1) étant munie d'un tableau mémoire (30, 50) destiné à mémoriser un état de chacune desdites stations normales (2 à N), un moyen de scrutation destiné à demander à chacune desdites stations normales (2 à N) si elles souhaitent se joindre à un anneau logique composé de ces stations qui sont disponibles pour une communication ou non, et un moyen de mise à jour destiné à réviser le contenu dudit tableau mémoire (30, 50) conformément à un résultat de ladite demande ou scrutation par ledit moyen de scrutation et chacune de ladite station maître et desdites stations normales (2 à N) étant munies d'un moyen pour transmettre un jeton représentant une priorité de transmission à l'une desdites stations (1 à N) contiguë à celle-ci dans ledit anneau logique,
caractérisé en ce que
chacune desdites stations normales (2 à N) est munie d'un moyen pour envoyer un accusé de réception dudit jeton à l'expéditeur dudit jeton, un moyen pour recevoir un accusé de réception dudit jeton provenant de la station qui a reçu ledit jeton venant de ladite station normale et un moyen pour renvoyer ledit jeton à ladite station maître (1) lorsque ladite station normale a transmis ledit jeton à la station suivante et n'a pas réussi à recevoir ledit accusé de réception venant de ladite station suivante,
ladite station maître (11) est munie d'un moyen destiné à déconnecter ladite station suivante qui n'a pas réussi à expédier un accusé de réception à partir dudit anneau logique et un moyen pour transmettre ledit jeton à une autre station qui est la suivante dans ledit anneau logique de ladite station suivante, et
la scrutation destinée à construire l'anneau logique et les communications de données entre les stations de réseau (1 à N) se produisent dans des phases en alternance sur le bus (10).

2. Système de communication selon la revendication 1, dans lequel chacune desdites stations normales (2 à N) sont munies d'un moyen de réponse pour retourner une réponse à ladite station maître (1) en réponse à ladite scrutation lorsque ladite station normale modifie son état dans ledit anneau logique.

3. Système de communication selon la revendication 1 ou la revendication 2, dans lequel ladite station maître (1) est munie d'un moyen destiné à informer simultanément chacune desdites stations normales (2 à N) d'un état dudit anneau logique et chacune desdites stations normales (2 à N) est munie d'un moyen de mémoire (30) destiné à mémoriser ledit état dudit anneau logique dont l'informe ladite station maître (1).

4. Système de communication selon la revendication 3, dans lequel ledit moyen de mémoire (30) de chacune desdites stations normales (2 à N) mémorise une adresse de ladite station normale et une adresse d'une autre station qui suit, dans ledit anneau logique, ladite station normale dans ladite table mémoire.

5. Système de communication selon l'une quelconque des revendications 1 à 4, dans lequel ladite scrutation par ladite station maître (1) est exécutée à chaque fois que ledit jeton a été transmis complètement tout autour dudit anneau logique et ne couvre qu'une partie d'une totalité desdites stations normales (2 à N), celles des stations normales qui n'ont pas été couvertes par ladite scrutation étant couvertes par les scrutations suivantes de ladite station maître (1).

6. Système de communication selon l'une quelconque des revendications 1 à 5, dans lequel ladite table mémoire (30, 50) de ladite station maître (1) mémorise non seulement l'état des stations normales appartenant audit anneau logique mais également les stations normales n'appartenant pas audit anneau logique.

7. Système de communication selon l'une quelconque des revendications 1 à 6, dans lequel au moins l'une desdites stations normales (2 à N) est munie d'un moyen destiné à détecter un défaut dans ladite station maître (1) et un moyen destiné à activer ladite station normale en tant que nouvelle station maître (6) sur la détection dudit défaut dans ladite station maître (1).

8. Système de communication selon la revendication 7, dans lequel deux desdites stations normales (2 à N) ou plus sont chacune munies d'un moyen pour détecter un défaut dans ladite station maître (1), un moyen pour activer ladite station normale en tant que nouvelle station maître (6) et un moyen pour déterminer laquelle desdites stations normales qualifiées devrait être activée en tant que nouvelle station maître (6).
